Europäisches Patentamt

European Patent Office

Office européen des brevets

(19)

(11) Veröffentlichungsnummer: **0 075 888**
**B1**

(12) # EUROPÄISCHE PATENTSCHRIFT

(45) Veröffentlichungstag der Patentschrift:
14.01.87

(51) Int. Cl.⁴: **H 04 K 1/06, H 04 B 1/66**

(21) Anmeldenummer: **82108849.9**

(22) Anmeldetag: **24.09.82**

(54) **Verfahren zur abhörsicheren frequenzbandkomprimierten Übertragung von Sprachsignalen.**

(30) Priorität: **28.09.81 DE 3138523**

(43) Veröffentlichungstag der Anmeldung:
**06.04.83 Patentblatt 83/14**

(45) Bekanntmachung des Hinweises auf die Patenterteilung:
**14.01.87 Patentblatt 87/3**

(84) Benannte Vertragsstaaten:
**AT CH DE FR GB IT LI NL SE**

(56) Entgegenhaltungen:
**DE-A-2 316 647**
**DE-A-2 359 673**

**ELEKTROTECHNIK, Band 58, Nr. 23, 3. Dezember 1976, Seiten 16-21, Würzburg, DE; B. OSTERMANN: "Sicherheit für Daten und Nachrichten" 1977 INTERNATIONAL CONFERENCE ON COMMUNICATIONS, CONFERENCE RECORD, 12.-15. Juni 1977, Chicago, Band 1, Seiten 13.4-301 bis 13.4-305, IEEE, New York, US; N.S. JAYANT: "Speech encryption by manipulations of LPC and waveform-code parameters"**

(73) Patentinhaber: **Siemens Aktiengesellschaft Berlin und München, Wittelsbacherplatz 2, D-8000 München 2 (DE)**

(72) Erfinder: **Hanni, Manfred, Ing. grad., Gottschalkstrasse 3, D-8031 Puchheim (DE)**
Erfinder: **Brusch, Josef, Ing. grad., Fasanenstrasse 22, D-8025 Unterhaching (DE)**

## Beschreibung

Die Erfindung bezieht sich auf ein Verfahren zur abhörsicheren frequenzbandkomprimierten Übertragung von Sprachsignalen nach dem Kanalvocoderprinzip, bei dem sendeseitig in einem Analyseteil von der in mehrere Spektralkanäle aufgeteilten Signalenergie in jedem Analyseintervall über Gleichrichteranordnungen hinweg die mittlere spektrale Leistung angebende Abtastwerte sowie weitere sprachspezifische Parameter darstellende Abtastwerte gewonnen und zusammen mit wenigstens einer Synchronisierinformation in Form eines zeitmultiplexen Rahmens (Summensignal) zur Empfangsseite übertragen werden und bei dem empfangsseitig die einzelnen Abtastwerte des zeitmultiplexen Summensignals rahmenweise auf die zugehörigen Spektralkanäle sowie auf die zugehörigen Eingänge für die sprachspezifischen Parameter und die Synchronisierinformation eines Syntheseteils aufgeteilt werden, das hieraus das ursprüngliche Sprachsignal synthetisch generiert.

Verfahren dieser Art, wie sie beispielsweise durch die DE-A- 11 73 984 bekannt sind, finden überall da Anwendung, wo für eine übliche Sprachübertragung ein Übertragungskanal mit einer hierfür ausreichenden Bandbreite nicht zur Verfügung steht. Bei Anwendung des Kanalvocoderprinzips läßt sich ein Sprachsignal auch über Kanäle mit einer Übertragungsbandbreite von lediglich 1000 Hz und weniger übertragen. Da beim Kanalvocoder lediglich die Hüllkurvenwerte der Spektralkanäle sowie weitere sprachspezifische Parameter, wie die Sprachgrundfrequenz und das Stimmhaft-Stimmlos-Kriterium (Pitchsignal), übertragen werden, weist ein solcher Übertragungskanal auch bereits eine gute Abhörsicherheit auf.

Werden an die Übertragung von Sprache hinsichtlich ihrer Abhörsicherheit höhere Anforderungen gestellt, ist es üblich, ein solches Sprachsignal in ein codiertes Sprachsignal umzusetzen und das codierte Signal sodann durch Anwendung einer Modulo-2-Addition mit einer Schlüsselfolge zu verschlüsseln. Auch hier bietet die Anwendung des Kanalvocoderprinzips hinsichtlich eines möglichst geringen Bandbreitebedarfs erhebliche Vorteile. Anstelle der in diesem Falle üblicherweise benötigten 64 kbit läßt sich ein digitales Kanalvocodersignal in verschlüsselter Form bereits mit 2,4 kbit/sec. übertragen. Hierzu werden die im Analyseteil ermittelten Abtastwerte der Spektralkanäle sowie der weiteren die sprachspezifischen Parameter darstellenden Abtastwerte vor ihrer Zusammenstellung zu einem zeitmultiplexen Summenkanal codiert und das zeitmultiplexe digitale Summensignal anschließend in üblicher Weise unter Anwendung einer Modulo-2-Addition mit einer Schlüsselfolge verschlüsselt.

Wie die Praxis zeigt, ergeben sich für die Übertragung digitaler und gegebenenfalls verschlüsselter Kanalvocodersignale über Kurzwellen-Funk erhebliche Schwierigkeiten, die durch auftretende Mehrwegeausbreitung sowie Selektivfading verursacht sind. Bei radiofrequenten Signalen, bei denen das Sprachsignal in analoger Form einem Träger in der Amplitude oder in der Frequenz aufmoduliert ist, führt der störende Einfluß von Mehrwegeausbreitung und Selektivfading im allgemeinen lediglich zu Signalverzerrungen, die z.B. durch Anhebung des Sendepegels weitgehend wieder ausgeglichen werden können. Bei digitalen Funksignalen dagegen führen beispielsweise Laufzeitunterschiede bei Mehrwegeausbreitung in der Größenordnung eines bits bereits zu einem völligen Zusammenbruch der Übertragungsstrecke. Auch kann hier der Störung nicht durch Anheben des Sendepegels entgegengewirkt werden. Außerdem wirkt sich der störende Einfluß der Mehrwegeausbreitung umso stärker aus, je höher die Bitrate innerhalb eines Kanals gewählt ist. Infolge der Digitalisierung des Sprachsignals läßt sich jedoch bei Anwendung des Kanalvocoderprinzips die Bitrate nicht wesentlich unter 2,4 kbit/sec. herabsetzen. Bei Anwendung der Vierphasenmodulation beispielsweise ist eine Bandbreite von ca. 3 kHz erforderlich.

Der Erfindung liegt die Aufgabe zugrunde, für ein Übertragungsverfahren der einleitend beschriebenen Art eine weitere Lösung anzugeben, die unter Anwendung des Kanalvocoderprinzips auch bei hohen Anforderungen an die Abhörsicherheit mit einem Frequenzbandbedarf auskommt, der wesentlich unterhalb einer Bandbreite von 3 kHz liegt.

Diese Aufgabe wird für ein Verfahren zur abhörsicheren frequenzbandkomprimierten Übertragung von Sprachsignalen nach dem Kanalvocoderprinzip gemäß der Erfindung dadurch gelöst, daß sendeseitig die zeitliche Verschachtelung der Abtastwerte und der Synchronisierinformation innerhalb aufeinander folgender Rahmen im Summensignal pseudozufällig erfolgt und das so gewonnene analoge Summensignal über ein formgebendes Netzwerk hinweg entweder unmittelbar in seiner Basis- oder einer gewünschten höheren Frequenzlage oder aber mittelbar einem Träger aufmoduliert zur Empfangsseite übertragen wird. Durch die Literaturstelle DE-A- 23 59 673, ist es zwar bereits bekannt, eine Sprachverschleierung dadurch herbeizuführen, daß das Sprachband in mehrere Teilbänder unterteilt wird und diese zeitlich verwürfelt in einer höheren Frequenzebene zur Empfangsseite übertragen werden. Eine Frequenzbandkompression ist hier nicht möglich und der Grad der Verschleierung relativ klein.

Der Erfindung liegt die wesentliche Erkenntnis zugrunde, daß sich eine erhebliche Verbesserung der Abhörsicherheit eines Kanalvocodersprachsignals auch unter Verzicht auf eine Verschlüsselung in einer digitalen Ebene dadurch herbeiführen läßt, daß die zeitliche Lage der Abtastwerte der Spektralkanäle sowie der weiteren sprechspezifischen Parameter einschließlich der Synchronisierinformation von Rahmen zu Rahmen pseudozufällig verändert wird. Das so gewonnene analoge Summensignal weist einen hohen Sprachverschleierungsgrad auf, der durch zusätzliche Maßnahmen noch weiter verbessert werden kann.

Eine erste bevorzugte Maßnahme besteht darin, daß außer der Sprachgrundfrequenz und dem Stimmhaft-Stimmlos-Kriterium die Lautstärke des sendeseitig auf einen konstanten Summenpegel eingeregelten zu übertragenden Sprachsignals einer der sprachspezifischen Parameter ist. Auf diese Weise wird sichergestellt, daß die Dynamik der Sprache im zu übertragenden verschleierten Signal nicht zu erkennen ist, jedoch empfangsseitig wiedergewonnen werden kann.

Bei einer zweiten bevorzugten Maßnahme ist sendeseitig die Anzahl der Abtastwerte der Spektralkanäle und der weiteren sprachspezifischen Parameter eines Analyseintervalls durch zusätzliche Blindwerte darstellende Abtastwerte erweitert, die beispielsweise von einer Rauschquelle abgeleitet werden können. Diese Blindwerte darstellenden Abtastwerte stellen eine zusätzliche Verfälschung des verschleierten Sprachsignals dar, die auf der Empfangsseite leicht unterdrückt werden können.

Eine dritte bevorzugte Maßnahme, die im Zusammenwirken mit der geschilderten zweiten bevorzugten Maßnahme zu kombinieren ist, sieht vor, daß die Anzahl der Blindwerte darstellenden Abtastwerste und damit die Länge eines Rahmens des Summensignals pseudozufällig von Rahmen zu Rahmen in der Größenordnung von maximal 10 % verändert wird. Eine wünschenswerte pseudozufällige Schwankung der Rahmenlänge hinterläßt in diesem Falle keine Informationslücken im zeitlichen Ablauf des Summensignals, da jeder Rahmen stets so lang ist, als es die Anzahl der zeitlich aufeinander folgenden Abtastwerte einschließlich der Synchronisierinformation erforderlich macht.

Um auf die zusätzliche Übertragung eines weiteren sprachspezifischen Parameters in Form einer Gleichstromkomponente verzichten zu können, wird in Weiterbildung der Erfindung vorgeschlagen, zum Gewinnen eines gleichstromfreien analogen Summensignals sendeseitig mittels des formgebenden Netzwerkes jeden zweiten Abtastwert der in einem Rahmen des Summensignals aufeinander folgenden Abtastwerte zu invertieren. Diese Invertierung wird empfangsseitig vor Auflösung des Summensignals in seine alten Abtastwerte wieder rückgängig gemacht.

Unter der Annahme, daß im Mittel alle 20 msec, d.h. im Rhythmus von 50 Hz, eine ein Analyseintervall darstellende Folge von Abtastwerten übertragen wird, ergibt sich bei z.B. 74 Spektralkanälen eine Bandbreite von ca. 1 kHz. Diese gegenüber einem digitalen Kanalvocodersprachsignal um etwa den Faktor 3 verminderte Bandbreite gibt die Möglichkeit, einen für die Übertragung verfügbaren Kanal mit einer Bandbreite von 3,1 kHz (nach CCITT-Norm) für die Durchführung eines Zweidraht-Duplexbetriebs dadurch auszunutzen, daß die verfügbare Bandbreite des Übertragungskanals unter Zuhilfenahme einer Filterweiche und eines Umsetzers in zwei Hälften für die Übertragung eines Summensignals in der einen Richtung in seiner unteren Frequenzbandhälfte und eines Summensignals in der anderen Richtung in seiner oberen Frequenzbandhälfte aufgeteilt wird.

Anhand von in der Zeichnung dargestellten Ausführungsbeispielen soll die Erfindung im folgenden noch näher erläutert werden. In der Zeichnung bedeuten

Fig. 1 das Blockschaltbild einer vom Verfahren nach der Erfindung Gebrauch machenden Sende-Emfangsstation,

Fig. 2 und 3 die Funktion der Sende-Empfangsstation nach Fig. 1 näher erläuternde Diagramme,

Fig. 4 die schematische Darstellung der Ausführungsform einer Sende-Empfangsstation zur Durchführung eines Zweidraht-Duplexbetriebes,

Fig. 5 ein die Wirkungsweise der Sende-Empfangsstation nach Fig. 4 näher erläuterndes Diagramm.

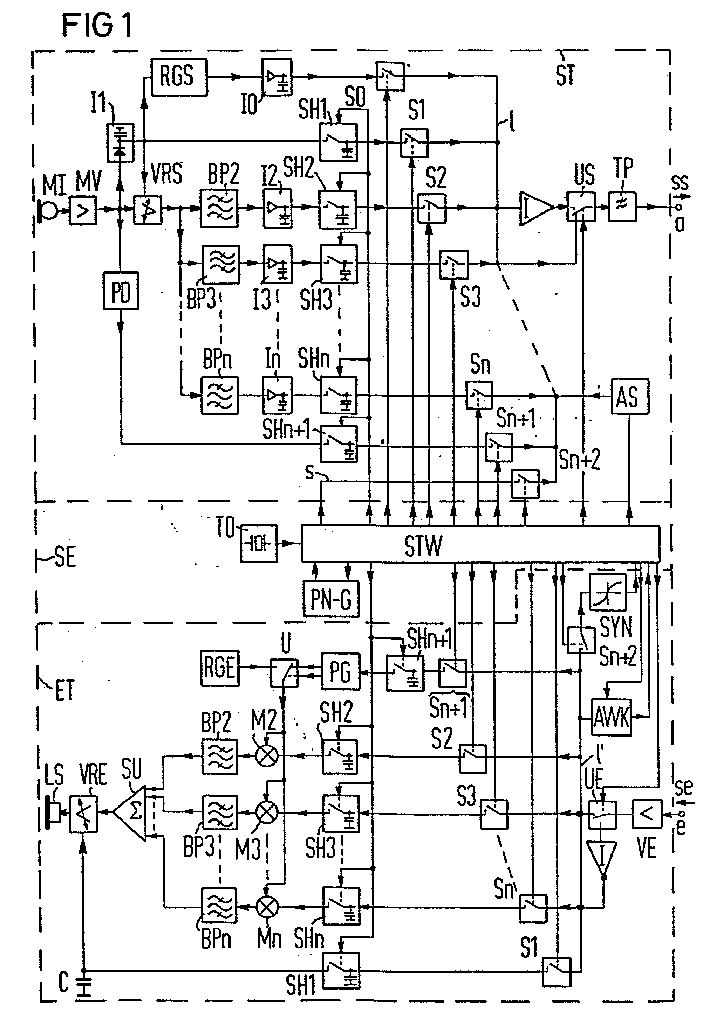

Die Sende-Empfangsstation nach Fig. 1 besteht aus dem eigentlichen Sendeteil ST, dem eigentlichen Empfangsteil ET und einer Sende- und Empfangsseite gemeinsamen Steuereinrichtung SE. Die Sende-Empfangsstation nach Fig. 1 ist für Wechselsprechbetrieb ausgelegt. Das Sendeteil ST weist eingangsseitig das Mikrofon MI auf, dessen Ausgangssignal im Mikrofonvorverstärker MV verstärkt und anschließend dem Analyseteil zugeführt wird. Das Ausgangssignal des Mikrofonvorverstärkers MV wird auf der Eingangsseite des Analyseteils einer Gleichrichter anordnung mit Integrationseigenschaften II, einem das-Stimmhaft-Stimmlos-Kriterium erzeugenden Pitchdetektor PD sowie einem Regelverstärker VRS zugetuhrt. Mit Hilfe des Ausgangssignals der Gleichrichteranordnung II wird der Pegel des Sprachsignals am Ausgang des sendeseitigen Regelverstärkers VRS auf einen konstanten Wert eingestellt. An den Ausgang des sendeseitigen Regelverstärkers VRS schließt sich eine die Spektralkanäle bildende Filterbank, bestehend aus den Bandpaßfiltern BP2, BP3 ... BPn an. Diesen Bandpaßfiltern sind die Integratoreigenschaften aufweisenden Gleichrichteranordnungen 12, 13 ... In nachgeschaltet, deren Ausgang wiederum jeweils mit einer Abtastwerthalteschaltung SH2, SH3 ... SHn verbunden sind. Gleiche Abtastwerthalteschaltungen SH1 und SHn + 1 sind für die Abtastung des Lautstärkekriteriums am Ausgang der Gleichrichterenordnung II und des Ausgangssignals des Pitchdetektors PD vorgesehen. Das die Lautstärke angebende Signal am Ausgang der Gleichrichteranordnung II wird weiterhin dem Steuereingang des sendeseitigen Rauschgenerators RGS zugeführt, dessen Ausgangssignal über die Gleichrichteranordnung mit integrierenden Eigenschaften ID und den steuerbaren Schalter S0 der Ausgangsleitung 1 zugeführt ist. Die Ausgänge sämtlicher Abtastwerthalteschaltungen sind jeweils über einen steuerbaren Schalter S1 ... Sn und Sn+1 ebenfalls an die gemeinsame Ausgangsleitung 1 angeschlossen. Ein zusätzlicher steuerbarer Schalter Sn+2 verbindet die die Synchronisierinformation liefernde Leitung s mit der Ausgangsleitung 1.

Die Ausgangsleitung 1, die den Ausgang des Analyseteils darstellt, ist abhängig von der Schaltstellung des sendeseitigen Umschalters US entweder unmittelbar oder aber mittelbar über den Inverter 1 hinweg mit dem Eingang des Tiefpasses TP verbunden, an dessen Ausgang a das sendeseitige Summensignal ss abgegeben wird. Weiterhin weist das Sendeteil ST den das Anfangssynchronisiersignal enthaltenden Speicher AS auf, aus dem zu Beginn einer durchzuführenden Übertragung ein Synchronisiermuster an die gemeinsame Ausgangsleitung 1 ausgegeben wird.

Die gemeinsame Steuereinrichtung SE besteht aus dem Steuerwerk STW, dem quarzstabilisierten Taktoszillator TO und einem Pseudozufallsgenerator PN-G. Das Steuerwerk STW liefert sämtliche Takte für die Steuerung der Abtastwerthalteschaltungen SH0, SH1 ... SHn und SHn+1, sowie die Steuertakte für die Schalter S0, S1 ... Sn, Sn+1 und Sn+2. Weiterhin liefert das Steuerwerk STW den Steuertakt für den sendeseitigen Umschalter US und den Speicher AS für die Ausgabe des Synchronisiermusters.

Während die Steuerung der Abtastwerthalteschaltungen gleichzeitig in Rhythmus der aufeinander folgenden AnalyseinteM alle, beispielsweise alie 20 msec, erfolgt, werden die den Abtastwerthalteschaltungen nachfolgenden Schalter S1, S2 ... Sn, Sn+1 und Sn+2 innerhalb eines Analyseintex alls jeweils einmal betätigt, wobei die Reihenfolge der Betätigung in Abhängigkeit des vom Pseudozufallsgenerator PN-G erzeugten Impulsmusters pseudozufällig vorgenommen ist. Auch der dem Rauschsignal des sendeseitigen Rauschgenerators RGS zugeordnete Schalter SO wird, wie auch die übrigen Schalter S1, S2 ... Sn, Sn+1 und Sn+2, innerhalb eines Analyseintervalls mit pseudozufälliger Zeitlage betätigt, doch kann hier die Betätigung innerhalb eines Analyseintex alls mehr als einmal erfolgen. Die Anzahl der über den Schalter SO der gemeinsamen Ausgangsleitung 1 zugeführten Rauschabtastwerte pro Analyseintervall ist von der Bandbreite abhängig, die dem Summensignal verfügbar ist. Wie bereits erwähnt wurde, erhöhen diese innerhalb eines Rahmens des Summensignals übertragenen Rauschabtastwerte den Verschleierungsgrad des Summensignals. Der sendeseitige Umschalter US, der ihm vorgeschaltete Inverter 1 und der ihm nachgeschaltete Tiefpaß TP stellen zusammen ein formgebendes Netzwerk für das am Ausgang a abgegebene sendeseitige Summensignal ss dar. Der sendeseitige Umschalter US hat in Verbindung mit dem Inverter I die Aufgabe, jeden zweiten der in einem Rahmen aufeinander folgenden Abtastwerte an den Ausgängen der Schalter S0, S1 ... Sn, Sn+1 und Sn+2 zu invertieren und auf diese Weise ein von einer Gleichstromkomponente freies Wechselspannungssignal zu erhalten. Der Tiefpaß seinerseits unterdrückt unerwünschte Oberwellen.

Das Empfangsteil ET empfängt am Eingang e das empfangsseitige Summensignal se, das im empfangsseitigen Verstärker VE verstärkt und anschließend über den empfangsseitigen Umschalter UE in Abhängigkeit der Schaltstellung seines Schaltarms entweder über den Inverter I oder aber unmittelbar der gemeinsamen Eingangsleitung I' für die Schalter S1, S2 ... Sn, Sn+1, Sn+2, die den Eingang des Syntheseteils darstellt, zugeführt wird. Mittels des emfangsseitigen Umschalters UE in Verbindung mit dem Inverter 1 wird die sendeseitige Invertierung jedes zweiten Abtastwertes der in einem Rahmen aufeinander folgenden Abtastwerte rückgängig gemacht. Entsprechend dem Sendeteil ST sind die an die gemeinsame Eingangsleitung I'angeschlossenen Schalter S1, S2 ... Sn und Sn+1 mit den Eingängen der Abtastwerthalteschaltungen SH1, SH2 ... SHn und SHn+1 eingangsseitig verbunden. Der Schalter Sn+1 ist mit dem Synchronsignaldiskriminator SYN verbunden, der ausgangsseitig mit einem Steuereingang des Steuerwerks STW in Verbindung steht.

Die Abtastwerthalteschaltungen SH2, SH3 ... SHn der Spektralkanäle sind ausgangsseitig an einen Eingang der Multiplikatoren M2, M3 ... Mn angeschaltet, deren zweiter Ausgang je nach Art des übertragenen Stimmhaft-Stimmlos-Kriteriums, das dem Steuereinga g des Pitchgenerators PG zugeführt wird, entweder das Ausgangssignal des Pitchgenerators PG oder aber das Ausgangssignal des empfangsseitigen Rauschgenerators RGB wirksam macht. Die auf diese Weise gewichteten Abtastwerte der Spektralkanäle werden anschließend über die Bandpaßfilter BP2, BP3 ... BPn einem Summierer SU zugeführt, der ausgangsseitig über einen empfangsseitigen Regelverstärker VRE die synthetisch generierte Sprache über den Lautsprecher LS abstrahlt. Der die Lautstärkeinformation enthaltende übertragene Abtastwert wird über die Abtastwerthalteschaltung SHI und einen eine Zeitkonstante erzeugenden Kondensator C dem Steuereingang des empfangsseitigen Regelverstärkers VRE zugeführt.

Das Empfangsteil ET weist ferner noch einen Synchronisiermusterkorrelator AWK auf, der eingangsseitig an die gemeinsame Eingangsleitung I' angeschaltet ist und ausgangsseitig mit dem Steuerwerk STW verbunden ist. Für seine Aktivierung zu Beginn einer durchzuführenden Übertragung ist ferner eine weitere Steuerleitung vom Steuerwerk STLV zum Synchronisiermusterkorrelator A'HK vorgesehen.

Die Steuertakte für die Schalter und die Abtastwerthalteschaltungen liefert wiederum das Steuerwerk STW, das die Schalter S1, S2 ... Sn, Sn+1 und Sn+2 im Rhythmus einer Rahmenperiode des empfangsseitigen Summensignals se jeweils einmal betätigt und zwar so, daß die den Spektralkanälen, dem Pitchgenerator PO, dem empfangsseitigen Regelverstärker VRE und dem Synchronsignaldiskriminator SYN zugehörigen Abtastwerte an den zugehörigen Eingängen anstehen.

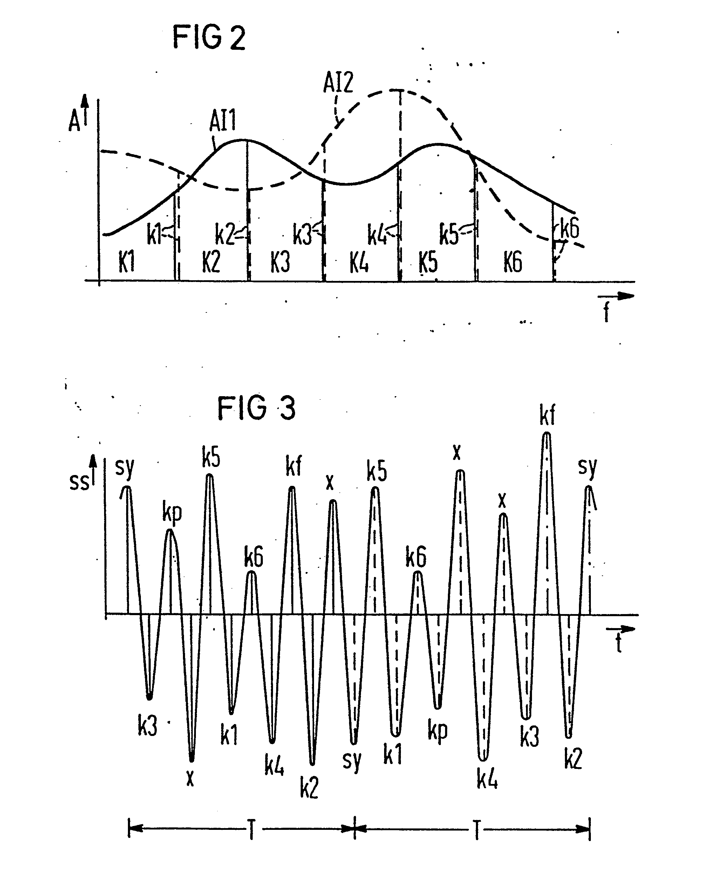

Zur weiteren Erläuterung der Wirkungsweise der Sende-Empfangseinrichtung nach Fig. 1 ist in Fig. 2 über der Frequenz f der Amplitudenverlauf A für ein aus sechs Spektralkanälen K1, K2 ... K6 bestehendes Kanalvocodersignal für zwei aufeinander folgende Analyseintervalle AI1 und AI2 aufgetragen. In gleicher Weise sind die im Zeitpunkt einer Betätigung der Abtastwerthalteschaltungen am Ausgang der Gleichrichteranordnung abgegriffenen, die mittlere spektrale Leistung angebenden Abtastwerte k1, k2 ... k6 angegeben. Zur besseren Unterscheidung ist in Fig. 2 der spektrale Amplitudenverlauf des dem Analyseintervall AI1 nachfolgenden Analyseintervalls AI2 einschließlich der Abtastwerte in unterbrochener Linie dargestellt.

Das Diagramm in Fig. 3 zeigt über der Zeit den Amplitudenverlauf des sendeseitigen Summensignals ss über die beiden Analyseintervalle AI1 und AI2 nach Fig. 2 hinweg am Ausgang a nach Fig. 1. Hierbei ist die durch ein Analyseintervall vorgegebene Länge der Rahmen T in Fig. 3 ebenfalls eingezeichnet. Wie Fig. 3 erkennen läßt, sind nicht nur die Abtastwerte k1, k2 ... k6, die sprachspezifischen Parameter, nämlich die Grundfrequenzinformation Rf und die Pitchinformation kp, die Synchronisierinformation sy und die Rauschabtastwerte x quasizufällig in ihrer Zeitlage innerhalb eines Rahmens T angeordnet, sondern auch innerhalb der pseudozufällig vorgegebenen Aufeinanderfolge wechselweise invertiert, wodurch ein für die Übertragung unerwünschter Gleichstromwert eliminiert wird. Die ebenfalls einen Abtastwert mit jedoch konstanter Amplitude darstellende Synchronisierinformation sy, die von Rahmen zu Rahmen ihr Vorzeichen wechselt, ist in Fig. 3 lediglich zum besseren Erkennen der Rahmen T am Anfang eines Rahmens angeordnet. In der Praxis wird diese Synchronisierinformation in ihrer zeitlichen Lage in gleicher Weise wie die übrigen Abtastwerte im Zuge der aufeinander folgenden Rahmen pseudozufällig in ihrer Zeitlage verschoben. Ihre Funktion, die Synchronisation der Empfangsseite im Rhythmus der aufeinander folgenden Rahmen des empfangsseitigen Summensignals se aufrecht zu erhalten, wird hierdurch nicht beeinträchtigt, weil die Position einer Synchronisierinformation durch die PN-Folge des PN-Generators jeweils vorgegeben ist.

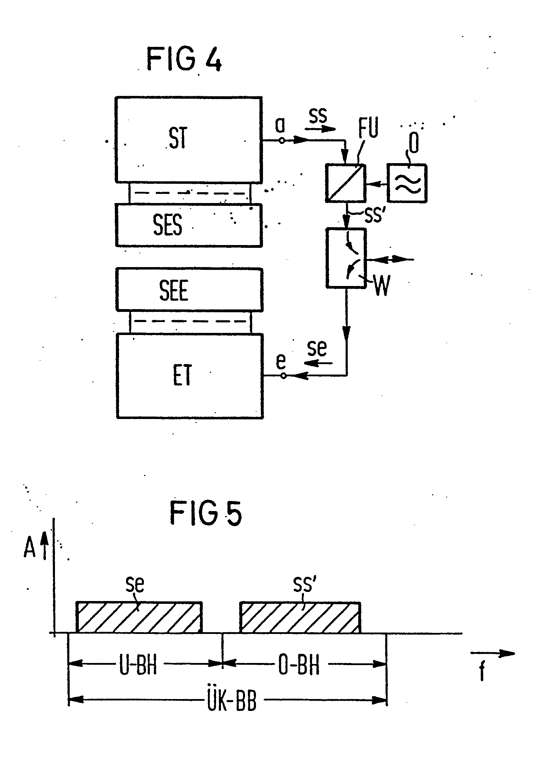

Das Ausführungsbeispiel in Fig. 4 zeigt eine Sende-Empfangsstation, die einen Zweidraht-Duplexbetrieb ermöglicht. Das Sendeteil ST und das Empfangsteil ET entsprechen hierbei den entsprechenden Teilen der Sende-Empfangsstation nach Fig. 1. Anstelle einer für Sende- und Empfangsteil gemeinsamen Steuereinrichtung ist hier jedoch einerseits dem Sendeteil ST und andererseits dem Empfangsteil üT jeweils eine Steuereinrichtung SES bzw. SEB zugeordnet. Zur Bildung der hier erforderlichen unterschiedlichen Frequenzkanäle für beide Übertragungsrichtungen wird das sendeseitige Summensignal ss am Ausgang a im Frequenzumsetzer FU mit dem Umsetzoszillator 0 zugeführt und in seiner Frequenz in einen höheren Bereich verschoben. Anschließend wird das so frequenzversetzte sendeseitige Summensignal ss' über die Filterweiche W an die für beide Übertragungsrichtungen gemeinsame Übertragungsstrecke abgegeben. Das ankommende empfangsseitige Summensignal se wird in der ursprünglichen Basisfrequenzlage über die Filterweiche W hinweg dem Eingang e des Empfangsteils ET zugeführt. Auf der Gegenstation ist im Unterschied zu der in Fig. 4 gezeigten Station der Umsetzer FU mit dem Umsetzoszillator in den Empfangszug eingeschleift.

Das Diagramm in Fig. 3 zeigt der Vollständigkeit halber über der Frequenz die mittlere Amplitude A des Spektrums des sendeseitigen frequenzversetzten Summensignals ss' in der oberen Bandhälfte 0-BH und des empfangsseitigen Summensignals ss in der unteren Bandhälfte U-BH des verfügbaren Frequenzbandes UK-BB des Übertragungskanals für einen mit einer Sende-Empfangsstation nach Fig. 4 durchführbaren Zweidraht-Duplexbetrieb.

## Patentansprüche

1. Verfahren zur abhörsicheren frequenzbandkomprimierten Übertragung von Sprachsignalen nach dem Kanalvocoderprinzip, bei dem sendeseitig in einem Analyseteil von der in mehrere Spektralkanäle (Ki) aufgeteilten Signalenergie in jedem Analyseintervall über Gleichrichteranordnungen (11, 12, ... ln) hinweg die mittlere spektrale Leistung angebende Abtastwerte (ki) sowie weitere sprachspezifische Parameter darstellende Informationen (kp, kf) gewonnen und zusammen mit wenigstens einer Synchronisierinformation (sy) in Form eines zeitmultiplexen Rahmens (Summensignal ss) zur Empfangsseite übertragen werden und bei dem empfangsseitig die einzelnen Abtastwerte des zeitmultiplexen Summensignals rahmenweise auf die zugehörigen Spektralkanäle sowie auf die zugehörigen Eingänge für die sprachspezifischen Parameter und die Synchronisierinformation eines Syntheseteils aufgeteilt werden, das hieraus das ursprüngliche Sprachsignal synthetisch generiert,

dadurch gekennzeichnet, daß sendeseitig die zeitliche Verschachtelung der Abtastwerte (kl, k2. .. k6) der sprachspezifischen Parameter (kp, kf) und der Synchronisierinformation (sy) innerhalb aufeinander folgender Rahmen (T) im Summensignal pseudozufällig erfolgt und das so gewonnene analoge Summensignal (ss) über ein formgebendes Netzwerk (I, US, TP) hinweg entweder unmittelbar in seiner Basis- oder einer gewünschten höheren Frequenzlage oder aber mittelbar einem Träger aufmoduliert zur Empfangsseite übertragen wird.

2. Verfahren nach Anspruch 1, dadurch gekennzeichnet, daß außer der Sprachgrundfrequenz und dem Stimmhaft-Stimmlos-Kriterium die Lautstärke des sendeseitig auf einen konstanten Summenpegel eingeregelten zu übertragenden Sprachsignals einer der sprachspezifischen Parameter ist.

3. Verfahren nach Anspruch 1 oder 2, dadurch gekennzeichnet, daß sendeseitig die Anzahl der Abtastwerte (kl, k2 ... k6) der Spektralkanäle (K1, K2 ... K6) und der weiteren sprachspezifischen Parameter (kf, kp) eines Analyseintervalls durch zusätzliche Blindwerte darstellende Abtastwerte (x) erweitert ist, die beispielsweise von einer Rauschquelle (RGS) abgeleitet sind.

4. Verfahren mach Anspruch 3, dadurch gekennzeichnet, daß die Anzahl der Blindwerte darstellenden Abtastwerte (x) und damit die Länge eines Rahmens (T) des Summensignals (ss, se) pseudozufällig von Rahmen zu Rahmen in der Größenordnung von maxZmal 10 % schwankt.

5. Verfahren nach einem der vorhergehenden Ansprüche, dadurch gekennzeichnet, daß zur Gewinnung eines gleichstromfreien analogen Summensignals sendeseitig mittels des formgebenden Netzwerkes (I, US, TP) jeder zweite Abtastwert (kl ... k6, kf, kp, sy) der in einem Rahmen des Summensignals aufeinander folgenden Abtastwerte invertiert wird und daß diese Invertierung empfangsseitig vor der Auflösung des Summensignals (se) in seine einzelnen Abtastwerte wieder rückgängig gemacht wird.

6. Verfahren nach einem der vorhergehenden Ansprüche, zur Durchführung eines Zweidraht-Duplexbetriebes, dadurch gekennzeichnet, daß die verfügbare Bandbreite (UK-BB) des Übertragungskanals unter Zuhilfenahme einer Filterweiche (W) und eines Umsetzers (FU, O) in zwei Hälften für die Übertragung eines

Summensignals (se) in der einen Richtung in seiner unteren Frequenzbandhälfte (U-BH) und eines Summensignals (ss) in der anderen Richtung in sek er oberen Frequenzbandhälfte (O-BH) aufgeteilt ist.

## Claims

1. A method for the frequency-band-compressed transmission of speech signals, with protection against listening-in, in accordance with the channel vocoder principle, wherein, at the transmitting end in an analysis component, in each analysis interval, via rectifier arrangements (11, 12 ... In), sample values (ki) representing the mean spectral power and items of information (kp, kf) representing additional speech-specific parameters are obtained from the signal energy which is split among a plurality of spectral channels (Ki) and are transmitted to the receiving end together with at least one item of synchronising information (sy) in the form of a t.d.m. frame (sum signal ss), and where at the receiving end the individual sample values of the t.d.m. aum signal are distributed frame by frame amongst the associated spectral channels and amongst the associated inputs for the speech-specific parameters and the synchronising information of a synthesising section which synthetically generates the original speech signal,

characterised in that at the transmitting end the time interleaving of the sample values (k1, k2. .. k6) of the speech-specific paramaters (kp, kf) and of the synchronising information (sy) is carried out in pseudo-random fashion within consecutive frames (T) in the sum signal and the analogue sum signal (ss) obtained in this way is transmitted to the receiving end via a shaping network (I, US, TP) either directly in its base position or a desired, higher frequency poeition or indirectly, modulated onto a carrier.

2. A method as claimed in claim 1, characterised in that in addition to the fundamental speech frequency and the voiced-unvoiced criterion, the volume of the speech signal, which is to be transmitted at the transmitting end adjusted to a constant sum level, represents one of the speech-specific parameters.

3. A method as claimed in claim 1 or 2, characterised in that at the transmitting end the number of sample values (k1, k2 ... k6) of the spectral channels (k1, k2 ... k6) and the additional speech-specific parameters (kf, kp) of an analysis interval is increased by sample values (x) which represent additional dummy values and which are derived, for example, from a noise source (RGS).

4. A method as claimed in claim 3, characterised in that the number of sample values (x) which represent dummy values and thus the length of a frame (T) of the sum signal (ss, se) fluctuates in pseudo-random fashion from frame to frame in the order of a maximum of 10%.

5. A method as claimed in one of the preceding claims, <u>characterised in</u> that in order to obtain an analogue sum signal which is free of direct current, at the transmitting end, by means of the shaping network (I, US, TP) each second sample value (k1 ... k6, kf, kp, sy) of the sample values which occur consecutively in a frame of the sum signal is inverted and that this inversion is cancelled at the receiving end before the sum signal (se) is split into its individual sample values.

6. A method as claimed in one of the preceding claims for the execution of a two-wire duplex operation, <u>characterised in</u> that the available bandwidth (UK-BB) of the transmission channel is split, by means of a dividing filter (W) and a converter (FU, O), into two halves for the transmission of a sum signal (se) in one direction in its lower frequency band half (U-BH) and a sum signal (ss) in the other direction in its upper frequency band half (O-BH).

**Revendications**

1. Procédé de transmission de signaux vocaux, avec protection contre le risque d'écoute et compression de la bande de fréquences, selon le principe du vocodeur à canaux et selon lequel, du côté émission, dans une partie d'analyse de l'énergie des signaux répartie dans plusieurs canaux spectraux (Ki), des valeurs d'exploration (Ki), qui indiquent la puissance spectrale moyenne, ainsi que d'autres informations (kp, kf), qui représentent des paramètres spécifiques à la parole, sont obtenues pendant chaque intervalle d'analyse par l'intermédiaire de dispositifs redresseurs (11, 12,...In) et sont transmis, ainsi qu'au moins une information de synchronisation (sy) sous la forme d'une trame multiplexée dans le temps (signal somme ss) en direction du côté réception et selon lequel, du côté réception, les différentes valeurs d'exploration du signal somme à multiplexage temporel sont réparties trame par trame entre les canaux spectraux associés ainsi qu'entre les entrées associées pour les paramètres spécifiques à la parole et pour l'information de synchronisation d'une partie effectuant la synthése qui, à partir de là, produit de façon synthétique le signal vocal initial, caractérisé par le fait que, du côté émission, l'imbrication temporelle des valeurs d'exploration (k1, k2,...k6) des paramètres (kp, kf) spécifiques à la parole et de l'information de synchronisation (sy) s'effectue d'une manière pseudoaléatoire dans des trames (C) successives à l'intérieur du signal somme et que le signal somme analogique ainsi obtenu (ss) est transmis au côté réception, par l'intermédiaire d'un réseau de mise en forme (I, US, TP), soit dans sa position de fréquence de base ou dans une position supérieure désirée de fréquence, soit directement avec modulation d'une porteuse.

2. Procédé selon la revendication 1, caractérisé en ce qu'en-dehors de la fréquence fondamentale de la parole et du critère son aigu son sourd, l'intensité sonore du signal vocal devant être transmis, qui est réglé du côté émission à un niveau somme constant, est l'un des paramètres spécifiques de la parole.

3. Procédé suivant la revendication 1 ou 2, caractérisé par le fait que, du côté émission, le nombre des valeurs d'exploration (k1, k2,...,k6) des canaux spectraux (K1, K2,...K6) et des autres paramètres (kf, kp), spécifiques à la parole, d'un intervalle d'analyse est accru par des valeurs d'exploration (x) représentant des valeurs fictives supplémentaires et qui sont tirées par exemple d'une source de bruit (RGS).

4. Procédé suivant la revendication 3, caractérisé par le fait que le nombre des valeurs d'exploration (x) représentant des valeurs fictives et par conséquent la longueur d'une trame (T) du signal somme (ss, se) varient d'une manière pseudo-aléatoire d'une trame à l'autre, d'un ordre de grandeur égal au maximum à 10 %.

5. Procédé suivant l'une des revendications précédentes, caractérisé par le fait que, du côté émission, pour obtenir un signal somme analogique exempt d'un courant continu, au moyen du réseau de mise en forme (I, US, TP), une valeur d'exploration (k1,...k6, kf, kp, sy) sur deux, appartenant aux valeurs d'exploration qui se succèdent dans une trame du signal somme, est inversée et que cette inversion est à nouveau annulée, du côté réception, avant la subdivision du signal somme (se) en ses valeurs d'exploration individuelles.

6. Procédé suivant l'une des revendications précédentes, pour la mise en oeuvre d'un fonctionnement en duplex à deux files, caractérisé par le fait que la largeur de bande disponible (UK-BB) du canal de transmission est subdivisée, moyennant l'utilisation d'un filtre d'aiguillage (W) et d'un convertisseur (FU, O) en deux moitiés pour la transmission d'un signal somme (se) dans une direction, dans la moitié inférieure (U-BH) de sa bande de fréquences, et pour la transmission d'un signal somme (ss) dans l'autre direction dans la moitié supérieure (O-BH) de sa bande de fréquences.

**FIG 1**

# FIG 2

# FIG 3

## FIG 4

## FIG 5